# EUROPEAN PATENT APPLICATION

(11) **EP 2 804 388 A1**
(43) Date of publication of application: **19.11.2014**
(21) Application number: 13167647.0
(22) Date of filing: 14.05.2013
(51) Int. Cl.: H04N 21/418, H04N 21/436, H04N 21/4363, H04N 21/4408

(54) **Common interface host and common interface conditional access module**

(71) Applicant: TP Vision Holding B.V., 1097 JB Amsterdam (NL)
(72) Inventor: Brondijk, Robert, 1097 JB Amsterdam (NL); Muijen, Maarten, 1097 JB Amsterdam (NL)
(74) Representative: Busch, Patrick

(57) **Abstract**

The invention provides a Common Interface, CI, host (10) comprising a Universal Serial Bus, USB, controller (30) for connecting to a USB device (31) of a Common Interface Conditional Access Module, CICAM, (20) the USB controller being configured to use
- a first logical pipe (33) for exchanging control information between the CICAM and the CI host; and
- a second logical pipe (35) for transmitting to the CICAM a first CA encrypted signal.
- a third logical pipe (37) for receiving a first CA decrypted signal, corresponding to the first CA encrypted signal, from the CICAM,

wherein the encrypted and decrypted signals are transported as chunks (60) comprising a header (61), the header including a time indication (64) and a duration indication (65) of the chunk.

## Description

### Field of the invention

The invention relates to a Common Interface Conditional Access Module, CICAM, for receiving and decrypting a Content Access, CA, encrypted signal.

### Background of the invention

CI (Common Interface) and CI Plus (Common Interface plus) are content control systems which are currently in use for satellite, terrestrial, and cable television program reception, in particular in the Digital Video Broadcasting DVB-S, DVB-T, and DVB-C standards. The CI or CI Plus system comprises a Content Access Module (CAM or CICAM) which, when inserted into the corresponding Common Interface slot of a compatible TV set (typically called the CI host), allows a user to subscribe and watch a pay TV service from a pay TV service operator, without requiring an additional set-top-box. The CICAM typically has a slot for inserting a smartcard that is issued by the service operator. The smart card, inserted into or embedded in the CI Plus-CAM, controls the decrypting of those TV programs to which the user is allowed access.

The main difference between CI and CI Plus is that in CI Plus, a trusted channel is formed between the CICAM and television receiver, so that the decrypted content can be re-encrypted, using a key that is known at both ends of the trusted channel, before it is sent back from the CICAM to the receiver. In fact, there are two channels: a control and a data channel. The control channel hosts the Secure Authenticated Channel (SAC), which is created by the CC application/resource. The data channel is used for content. CI Plus offers the possibility to encrypt the content sent from the module to the host using a content key which is provided to the host over the SAC channel. The data channel encryption makes it harder for third parties to "steal" the CAM-decrypted content by sampling the out-going signal from the CAM. In this application, the term SAC will typically be used for the control channel, whereas the term SAC connection (or SAC-based connection) refers to the entire control and data connection between CI host and CAM.

In known CI and CI Plus systems, the physical interface between the CAM and the receiver is formed using a (variant of) a PCMCIA (Personal Computer Memory Card International Association) connector. The PCMCIA standard dates from 1991, and the technology is becoming obsolete. Faster communication links are available, which are also less expensive to implement and require less physical space.

The Chinese standard SJ/T 11376-2007 Interface specification for conditional access of digital television receiver Part 2-1: UTI Technical specification, discloses a USB-based UTI interface between a host and a device. On top of the USB (physical) link layer, the full CI/CAM link layer is implemented. This results in a less than optimal design, since both link layers have overlapping functions.

The document "USB Device Class Definition for Video Devices: MPEG-2 TS Payload" version 1.1 by the USB Implementers Forum discloses a manner for transmitting an MPEG Transport Stream over a USB connection, outside of the CICAM context. Each TS packet is provided with its own encapsulation header, resulting in a significant overhead.

Therefore, there is a need for an improved link between a CICAM and a receiver.

### Summary of the invention

The invention provides a Common Interface, CI, host comprising a Universal Serial Bus, USB, controller for connecting to a USB device of a Common Interface Conditional Access Module, CICAM, the USB controller being configured to use
- a first logical pipe for exchanging control information between the CICAM and the CI host; and
- a second logical pipe for transmitting to the CICAM a first CA encrypted signal.
- a third logical pipe for receiving a first CA decrypted signal, corresponding to the first CA encrypted signal, from the CICAM, wherein the encrypted and decrypted signals are transported as chunks comprising a header, the header including a time indication and a duration indication of the chunk.

The incoming and outgoing CA encrypted/decrypted signals can have any suitable format. Most common are Transport Stream (TS) and ISO Base Media File Format (BMFF) formats. When the signals are transmitted over the USB connection, via the respective logical pipes, the signals are converted to chunks for USB transmission. After transmission over the USB connection, the original format may be reconstructed. The chunks include a header with time and duration information. This information can be used for clock recovery.

In an advantageous embodiment, the logical pipes for data transfer are implemented as USB bulk pipes. USB bulk pipes have native error detection features, so that the chunks do not need to implement additional checking (e.g.. no CRCs). This advantageously reduced overhead. In an embodiment, the chunks, as provided to the USB layer by the CI/CAM application, contain no error correction or detection data fields. In an embodiment, the control traffic over the first logical pipe comprises no data for error-checking or correcting of the chunks transmitted over the logical data pipes. The chunks may contain a plurality of packets, for example TS packets or ISOBMFF packets. However, only one header is needed for the chunk, further reducing the overhead. Since TS packets typically only require 188 Bytes and USB chunks may be of the order of 64 kiloBytes, a chunk may contain hundreds of packets. This again reduces overhead.

In summary, the system according the invention has the advantage of making optimal use of existing USB facilities for error-correction and synchronization, so that only a small additional overhead is needed to handle application specific issues, such as clock recovery. In addition, small packets can be efficiently packed into chunks, also reducing overhead.

By using separate message pipe and control pipes, the CI host thus separates the control signals from the CA decrypted signals. In general, the control signals are sent over a different pipe than the CA encrypted/decrypted (typically audio/video) signals.

In an embodiment according the invention, the first CA decrypted signal is a first re-encrypted CA decrypted signal and the CI host is configured to decrypt the re-encrypted first CA decrypted signal. This is compliant with the CI Plus standard, which provides a Content Control (CC) subsystem to protect decrypted signals by re-encrypting them after CA decryption. The re-encryption uses at least a different key (one which is known to the CICAM and the host to which it is connected) from the original CA encryption. In fact, the algorithm for re-encryption may also be different from the original CA encryption algorithm. The re-encryption key is known to both the CI host and the CICAM. The content encryption key is random. The CICAM sends the content encryption key over the SAC to the host. The SAC uses encryption and authentication keys which are derived from a shared secret that was established by a DH (Diffie-Hellman) protocol.

In an embodiment according the invention, the USB controller is further configured to use:
- a fourth logical pipe for transmitting to the CICAM a second CA encrypted signal.
- a fifth logical pipe for receiving a second CA decrypted signal, corresponding to the second CA encrypted signal, from the CICAM.

In general, the USB controller may use N logical pipes for transmitting different CA encrypted signals from the CI host to the CICAM, and N corresponding logical pipes for transmitting CA decrypted signals from the CICAM to the CI host, the 2N logical data pipes forming N pairs for N different CA encrypted/decrypted signals. The total number of pipes is than 2N+1, including the control pipe. It is an advantage of this feature that a CICAM may decrypt multiple signals (for example, multiple transport streams (TS) or ISO BMFF streams) at the same time. This would for example make simultaneous recording and viewing of different streams possible. Known PCMCIA-based CI/CI Plus systems do not offer the option of decrypting multiple transport streams simultaneously, at least partly due to limitations of the PCMCIA link.

In an embodiment according the invention, the second and further logical pipes use a bulk transfer type. In an embodiment, the pipes may be USB 2.0 or USB 3.0 pipes. The pipes may use USB 3.0 SuperSpeed transport.

In an embodiment according the invention, the control information exchanged over the first logical pipe comprises information about the contents of data chunks transmitted over the second and further logical pipes. For example, the control messages may refer to a unique identifier of a data chunk and indicate the contents of the referred-to chunk. The information can be used to aid in converting the chunks to the original stream format (e.g. TS or ISO BMFF formats).

In an embodiment according the invention, a data chunk transmitted over the second and further logical pipes comprise a plurality of signal packets, for example a plurality of Transport Stream packets. The headers of the chunks may contain all information needed to convert the chunks to the original stream format.

In an embodiment according the invention, the first logical pipe is a message pipe using the control transfer type. In an embodiment according the invention, the first logical pipe is the default control pipe. The first logical pipe can be the USB 3.0 (or later) Default Control Pipe.

In an embodiment according the invention, the CI host comprises a female Type A USB connector for connecting to a male Type A USB connector of a CICAM. Alternatively, a special type of USB connector may be used to avoid confusion on the part of consumers.

The invention further provides a digital television device or digital receiver comprising a CI host as described above.

The invention further provides a Conditional Access Module, CICAM, for receiving and decrypting a Content Access, CA, encrypted signal, the CICAM comprising a Universal Serial Bus, USB, device for connecting to a USB controller of a Common Interface, CI, host, the USB device being configured to use
- a first logical pipe for exchanging control information between the CICAM and the CI host; and
- a second logical pipe for receiving from the CI host a first CA encrypted signal.
- a third logical pipe for transmitting from the CICAM to the CI host a CA decrypted signal. The encrypted and decrypted signals are transported as chunks comprising a header, the header including a time indication and a duration indication of the chunk.

In an embodiment according the invention, the CICAM is configured to reencrypt the first CA decrypted signal prior to transmitting, and the CI host is configured to decrypt the re-encrypted transmitted signal.

In an embodiment according the invention, the CICAM comprises a male Type A USB connector. In an embodiment according the invention, the CICAM comprises a slot for a smart card having a Subscriber Identity Module, SIM, form factor, in particular a mini-SIM card or a micro-SIM card. Alternatively, the smart card functionality may be (permanently) embedded in the USB module. Mini- and micro-SIM cards have form factors that fit well with the dimensions of USB dongle devices. The CICAM may be formed as a USB dongle device, with a Type A USB connector on one side and a SIM slot on the other..

The invention further provides a system of a CI host according as described above and a CICAM as described above.

In an embodiment according the invention, the CICAM comprises a male Type A USB connector. In an embodiment, the CICAM comprises a slot for a smart card having a Subscriber Identity Module (SIM) form factor.

The invention also provides a system of a CICAM as described above and a CI host.

The invention also provides a method for decrypting a CA encrypted stream by a CI host and/or CICAM as described above.

In the disclosure, reference is sometimes made to USB 2.0 and USB 3.0 to illustrate certain points or possible alternatives. However, unless stated otherwise, the invention can be applied to any USB standard, including future USB versions with suitable backward compatibility.

### Brief description of the Figures

On the attached drawing sheets,
- figure 1 schematically shows a system of a CICAM and a digital TV receiver according to an embodiment of the invention;
- figure 2 schematically shows a CICAM according to an embodiment of the invention;
- figure 3 shows a schematic view of logical pipes between a CICAM device connected to a host receiver;
- figure 4 shows an alternative schematic view of logical pipes between a CICAM device connected to a host receiver; and
- figure 5 shows a further alternative schematic view of logical pipes between a CICAM device connected to a host receiver; and
- figure 6 shows a data chunk for transmission over a logical data pipe.

### Detailed description

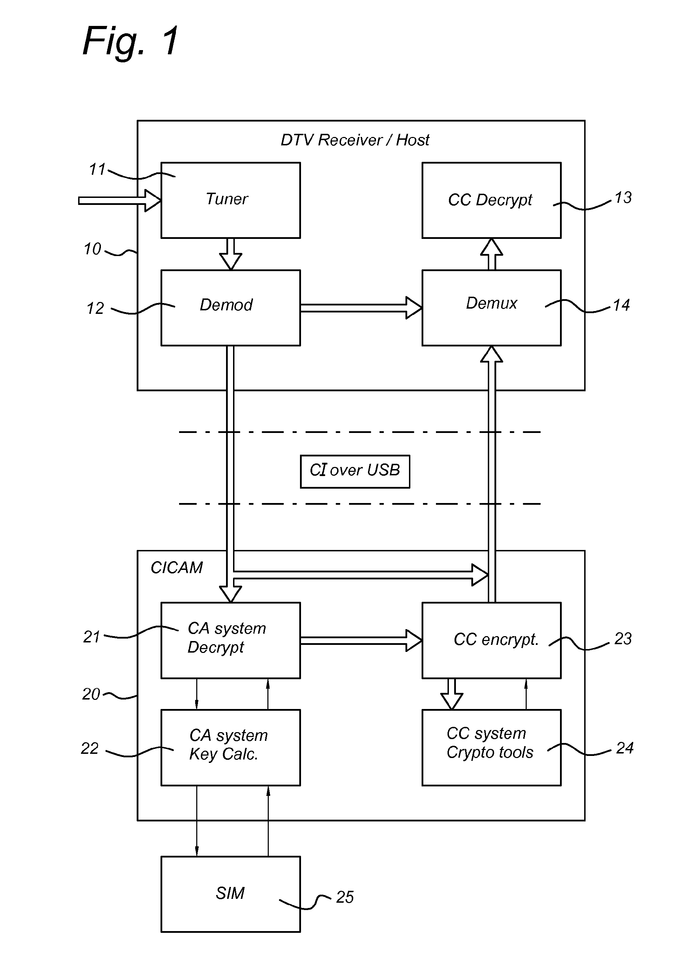

Figure 1 schematically shows a system of a CICAM 20 and a digital TV receiver or host 10 according to an embodiment of the invention.

Generally, the host 10 is a consumer electronics device that is used to receive and navigate the broadcast digital media. The host includes one or more slots which accept CICAMs. In an embodiment, the CICAM slot of the host has the form of a USB connector. In an embodiment, the slot is configured to receive a Type A USB connector. However, other USB forms (e.g. mini-USB or micro-USB may also be used).

Typically the host device contains some form of tuner 11, a demodulator 12, a demultiplexer (Demux) 14 and media decoders (not shown). These are the usual pre-requisites for the reception of digital TV.

For free-to-air material this is all that is required to receive and decode digital content, for content protected by a CA system then a CICAM is required. DVB CICAMs that comply with the CI standard EN 50221 have no Content Control system 23, 24 to protect the descrambled content. In CI systems, content where the CA system protection has been removed is passed to the host unprotected.

Hosts compliant with the CI Plus standard have a Content Control decryption module 13. The CI Plus host interoperates with the CICAM to provide a secure content control system 13, 23, 24 to protect high value content which has been CA decrypted.

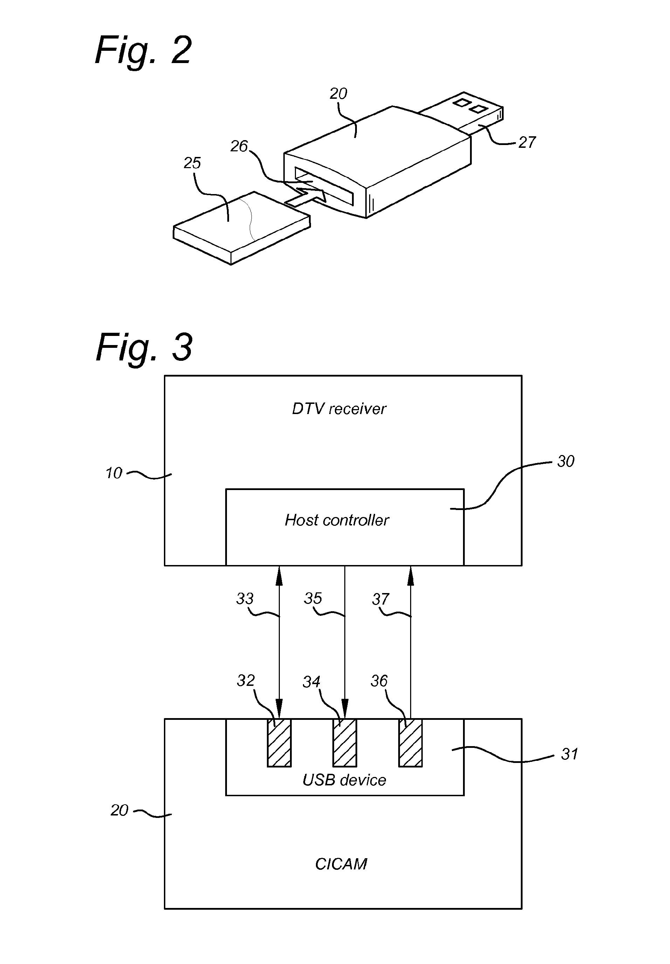

The CICAM contains the consumer end of the CA system. It comprises a CA decryption module 21 for decrypting secure content, a CA key calculation module 22 for calculating keys based in part on data from a smart card 25, and a smart card interface 26 (see figure 2) for receiving the smart card. Typically, the keys to decrypt CA protected content (the so-called control words) are provided by the smart card directly to the DVB descrambler on the module. Alternatively, the smart card and DVB descrambler on the module share or negotiate a cryptographic key that is used to encrypt the control words when transmitted from the smart card to the module (this to prevent interception and the real-time distribution of control words).

CI Plus CAMS (hereafter also denoted as CICAM) also include Content Control (CC) modules for re-encrypting the CA decrypted signal. The module implements the CC application that communicates over the control channel which the CC resource implemented in the host The Content Control encryption module 23 thus re-encrypts the content using a key that has been agreed on a shared secure channel between the CICAM and the host. The CC system crypto tools module 24 facilitates in generating keys and setting up a secure channel with the host. Module 24 also contains cryptographic tools and features which enable it to authenticate the trustworthiness of the host the CICAM has been inserted into.

Figure 2 schematically shows a perspective view of CICAM 20 according to an embodiment of the invention. The CICAM 20 has a slot 26 for receiving a module 25 which functions as smart card 25. The module 25 can have the form factor of a mini-SIM (Subscriber Identity Module) as is known from mobile telephone applications. A micro-SIM form factor may also be used. The CICAM 20 has a male Type A USB (Universal Serial Bus) connector 27 for insertion into a corresponding female USB connector of a host (not shown).

When the CICAM 20 connector 27 is inserted in a corresponding USB slot of a host, a CI over USB connection is formed. In the downstream direction (defined as the direction from the host to the CICAM) the CA encrypted content is transmitted, and in the upstream direction (defined as the direction from the CICAM to the host), the decrypted content (CI standard) or CC encrypted content (CI Plus standard) is transmitted.

Before further details of the CI over USB link are provided, some background information on USB is given.

USB was originally designed as a standard for connecting peripheral devices to computers. In recent years, it has become commonly used in all sorts of (consumer) electronics devices. USB standard 1.0 offered 1.5 Mbit/s transfer speed. Later versions increased this speed, with USB 2.0 offering 480 Mbit/s over 4 physical wires. The wires are typically labelled Vcc (5 Volt), GND (ground), D-, and D+, with the latter two wires forming a twisted-pair for data.

USB 3.0, described in the USB 3.0 Specification Revision 1.0 dated June 6, 2011, is similar to earlier versions of USB in that it is a cable bus supporting data exchange between a host computer and a wide range of simultaneously accessible peripherals. The attached peripherals share bandwidth through a host-scheduled protocol. The bus allows peripherals to be attached, configured, used, and detached while the host and other peripherals are in operation. However, in contrast to USB 2.0 and earlier versions, USB 3.0 utilizes 10 wires. In addition to the 4 wires of previous USB standards, six wires for three additional twisted pairs are added.

USB 3.0 utilizes a dual-bus architecture that provides backward compatibility with USB 2.0. It provides for simultaneous operation of SuperSpeed and non-SuperSpeed (USB 2.0 speeds) information exchanges.

USB device communication is based on logical channels called "pipes" between a host controller (in one device) to a logical entity called the endpoint, on another device. There are two types of pipes: stream (or data) and message pipes. A message pipe is bi-directional and is used for control transfers. Message pipes use the control transfer type, and are typically used for command traffic from the host to the device and vice versa. A stream pipe is a uni-directional pipe connected to a uni-directional endpoint that transfers data using one of three other transfer types: isochronous, interrupt, or bulk transfer.

Isochronous transfers take place at some guaranteed data rate, with possible occasional data loss. Interrupt transfers are suitable for quick responses, for example for mice and keyboard peripherals. Bulk transfers are large sporadic transfers using all remaining available bandwidth, but with no guarantees on bandwidth or latency.

In USB 3.0, most pipes come into existence when the device is configured by system software. However, one message pipe, the Default Control Pipe, always exists once a device has been powered and is in the default state, to provide access to the device's configuration, status, and control information.

Also in USB 3.0, the bulk transfer type has an extension for SuperSpeed called Streams. Streams provide inband, protocol-level support for multiplexing multiple independent logical data streams through a standard bulk pipe.

Despite the fact that USB 3.0 can be said to be a full-duplex protocol, the logical pipes are still considered to be uni-directional. That is, for bi-direction data communication (data exchange), two logical pipes must be created (see e.g. section 4.4.6 on Bulk Transfers of the USB 3.0 Specification Rev 1.0 dated June 6, 2011). While it is sometimes said that USB 3.0 supports bi-directional data pipes, these bi-directional data pipes in fact consist of two logical pipes, one for upstream and one for downstream data communications. If a future USB version defines true bi-directional data pipes (using e.g. a bulk transfer type), then the invention may be practiced using such a bi-directional pipe. Such a bi-directional pipe can then be considered to embody two uni-directional data pipes as described in this disclosure.

In the present embodiments, we use bulk transfer type as the exemplary and preferred transfer type for data transfer over USB, both in USB 2.0 and USB 3.0 systems. In USB 3.0, bulk transfer types are also called stream or SuperSpeed transfer types. In principle, the invention can also be applied using isochronous transfer type or even interrupt transfer type for data transfer. However, bulk transfer type is considered the most practical type.

Figure 3 shows a schematic view of logical pipes between a CICAM device 20 connected to a host receiver 10. In this embodiment, the receiver is thus a host 10 in both the sense of the CI and CI Plus standard, and also a host (controller) in the sense of the USB standard, so that the receiver includes the USB host controller 30. However, it is possible to conceive embodiments in which the CICAM device plays the role of the USB host.

The USB device 31 in the CICAM device has three logical endpoints 32, 34, and 36. Endpoint 32 is connected to message pipe 33, for bi-directionally transmitting control traffic to and from the CICAM device using a control transfer type. In an embodiment, pipe 33 is the default control pipe (also known as "pipe 0"). Endpoint 34 is connected to downstream pipe 35 for receiving (at the CICAM device) CA encrypted video data. As mentioned previously, in an embodiment, pipe 35 uses the bulk transfer type. Endpoint 36 is connected to upstream pipe 37 for transmitting (from the CICAM device) CC encrypted video data. In an embodiment, pipe 37 also uses the bulk transfer type. The data pipes can be any USB data pipes, including USB 3.0 (or later) SuperSpeed pipes.

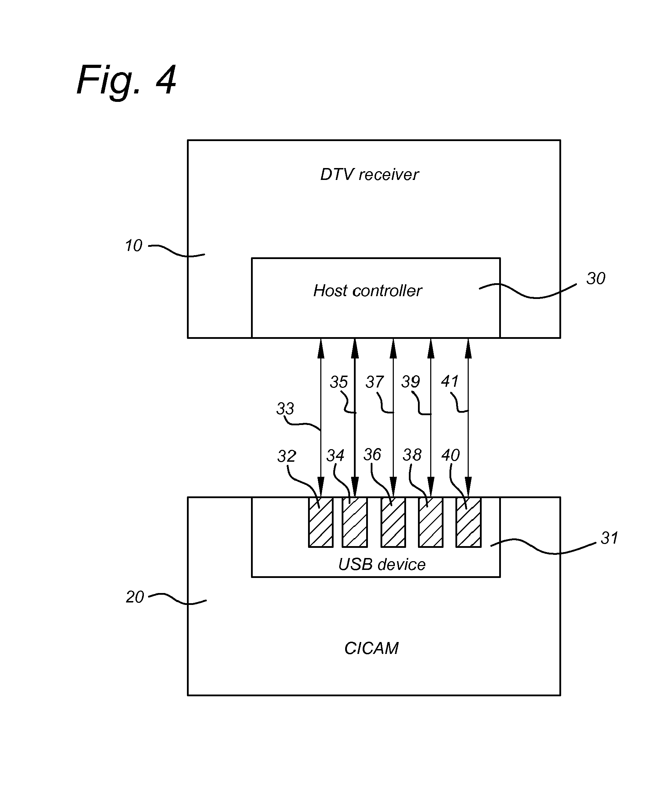

Figure 4 shows a further embodiment according the invention. Now there are five logical pipes between a CICAM device 20 connected to host receiver 10. Pipe 33 is still a message pipe (e.g. pipe 0) connected to endpoint 32, as described in reference to figure 3. Pipe 35 (connected to endpoint 34) transports, from the CI host to the CICAM, a first CA encrypted signal. Pipe 37 (endpoint 36) again transports, from the CICAM to the CI host, a first CA decrypted signal, which is obtained by decrypting the first CA encrypted signal and optionally re-encrypting it using a further key known to both the CICAM and the CI host. Pipe 39 (endpoint 38) is like pipe 35, except that here a second CA encrypted signal is transmitted. Pipe 41 (endpoint 40) is like pipe 37, except that a second CA decrypted signal is transmitted. The second CA encrypted signal may carry a different TS or ISO BMFF than the first CA encrypted signal. In that manner, the system thus supports the simultaneous decryption of multiple CA encrypted streams.

Figures 3 and 4 are examples of a more general embodiment of the invention in which N CA encrypted signals are received at the CICAM via N respective pipes/endpoints en N corresponding CA decrypted signals (possibly re-encrypted using a further key) are received at the CI host via N respective pipes/endpoints, where N=1 (figure 3), N=2 (figure 4), or N is equal to an integer value > 2.

In an embodiment, a total of 2N+1 pipes are provided: N upstream data pipes and N downstream data pipes, as described above, and 1 control pipe for exchanging control messages.

In the embodiments of figure 3 and figure 4 and the more general embodiment of 2N+1 pipes, the control traffic between CICAM and receiver/host is handled by a bidirectional pipe, preferably a message pipe using a control transfer type, for example by pipe 0. The stream content (e.g. audio/video) data is handled in one or more separate pipes. The stream content data can be transmitted using a variety of transfer types, for example in bulk mode or in SuperSpeed bulk mode (USB 3.0 and later).

This arrangement of transmitting control and encrypted/decrypted signal data over separate pipes has a number of advantages. For one, the control traffic is transmitted over a pipe with hardware checks to ensure the integrity of the control data. In contrast, some data transfer types allow a small possibility of transmission errors. For video signals, this is generally not a critical issue, since a small error in video data will likely go unnoticed.

The CA encrypted and CA decrypted data can in principle be in any (streaming) format. However, Transport Streams (TS) and ISO BMFF are the most common carriers of the type of data (audio/video) transmitted between CI and CICAM.

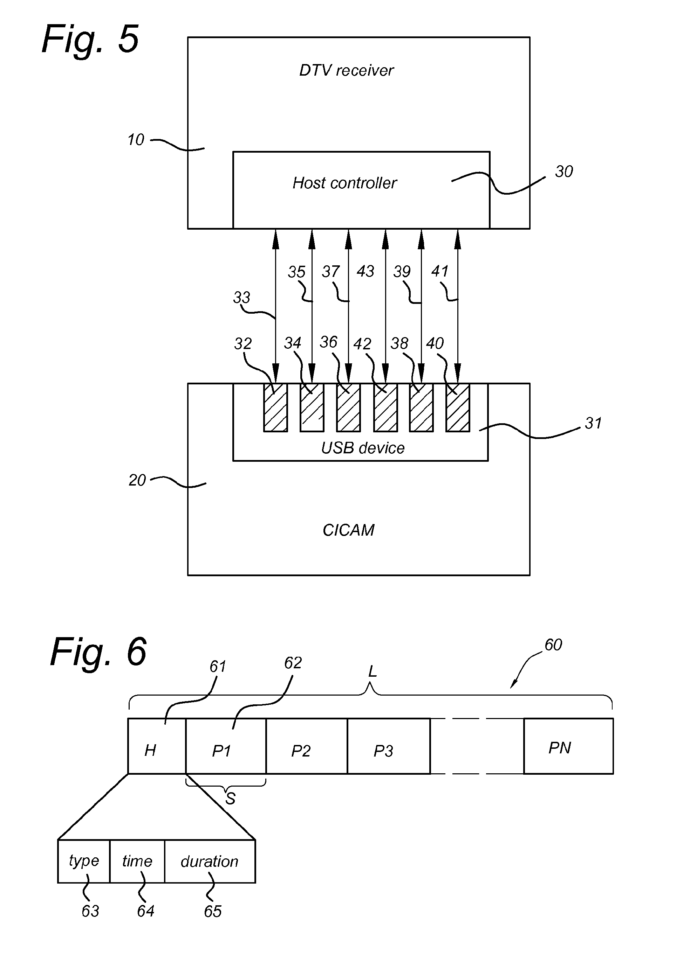

Figure 5 shows a further embodiment of the invention. The key difference between the embodiment of figure 4 is that two control pipes are defined. Bidirectional control pipe 33 still transmits control messages related to pipes 35 and 37. However, the control messages for pipes 39 and 41 are now sent over second control pipe 43 with endpoint 42.

The alternative of figure 5 is most appropriate when a single CAM is connected to two CI / CI-Plus hosts simultaneously. Each CI-Plus host will then negotiate its own Secure Authenticated Channel with the CAM, which can be advantageously assigned to a unique bidirectional message pipe 33, 43. In other words, the system will provide 2N+1 pipes for a first CI host and 2M+1 pipes for a second host, where N and M are numbers of transport streams to be decoded. The invention is not limited to two hosts, more hosts are possible too. For example, if P hosts are connected, each of the P hosts decrypting N_{P} transport streams, there will be P control pipes, and 2PN_{P} data pipes, so (2N_{P}+1)P pipes in total.

The data sent over the data pipes is organized in USB chunks. There are various options available for "repackaging" the CA encrypted/decrypted data for transport over the USB interface between CI en CICAM. In the case of TS input, a straightforward way would be to map each TS packet to a single USB chunk. However, this would not be a very efficient way since TS packets comprise 188 bytes, while USB chunks are typically several kiloBytes (kB) in size. A possible way would be to package items at a higher abstraction layer than the packet layer in separate chunks. For example, TS tables, which are split up and transmitted over several TS packets, can be re-assembled in the CI host and then sent as a single "table chunk" over the USB interface to the CICAM.

Figure 6 shows an example data chunk 60 for transmission over a USB interface (either upstream or downstream). The chunk 60 has a data or payload part 62 and a header 61.

The header 61 can be used to indicate the type of contents of the chunk. For example, it may indicate which table or TS packet is included in the payload. In an embodiment, the header 61 has a type field 63 for characterising the payload. The header 61 may comprise a time field 64 indicating a time stamp of the payload, for example the time stamp of the first TS packet of a transport stream payload. The header 61 may comprise a duration field 65 indicating a duration of the payload. the time field 64 and duration field 65 can be used for clock recovery in the CICAM system.

The payload can comprise N packets P₁, P₂, P₃, ..., P_{N}. In the case of a MPEG transport stream, the size s of the packets may be 188 Bytes (B), while the total size L of the chunk including header and payload may be of the order of 64 kiloByte (kB). For clock recovery, it is not essential that each packet is individually labelled with a time and duration value. Bundling N packets into a single chunk with a single header 61 advantageously prevents overhead compared to known variants in which each packet is encapsulated.

In addition, it is not necessary to include, as some standards do, CRC headers and other error-correction or detection data in the data chunks. For data integrity checks, the native USB bulk transfer provisions may be used. It is thus not necessary to replicate the error-correcting and detecting part of any transport layer that is mapped to the USB link. This also significantly reduces overhead.

The incoming (to be CA decrypted) TS or ISO BMFF stream (or any other suitable stream that is to be decrypted in the CICAM) can thus be converted by the CI host to a stream of USB data chunks. With the aid of the headers of the USB data chunks and/or messages on the control pipe, the receiving CICAM can reconstruct the TS or ISO BMFF stream, so that the CA encrypted signal can be decrypted. It may not be necessary to fully convert the chunks back to TS or ISO BMFF format - it is sufficient if the CICAM can identify which parts of the incoming data it needs to decrypt. After decryption an optional (for CI Plus) re-encryption, the CA decrypted data is converted again to USB chunks (if needed), and transmitted from the CICAM back to the CI over the USB link, using a suitable logical pipe. The CI host then recreates the original TS or ISO BMFF format as needed for further processing in the digital receiver or television.

Finally, some explanation is given regarding the control messages. In an embodiment, the default PIPE of the USB device is reserved exclusively for the control-layer of CI/CI Plus. One or more additional pipes are used to transfer the content. As shown in reference to figure 5, multiple control pipes may be defined. However, for now we assume a single pipe exists. In an embodiment, the control-layer of CI/CI Plus should be interpreted as the "session layer" and all higher layers in the Command Interfaces Layers stack as shown in figure 4 of CI standard EN 50221 (1997). In other words, traffic generated by the control-layer of CI/CI Plus is considered control traffic that will be transmitted over the dedicated bidirectional message or control pipe, such as pipe 0.

In summary, in an embodiment, the data pipes (e.g.. pipes 35, 37, 39, 41) transmit chunks with a "tag-length-value" format. The data transmitted over the data pipe is transmitted as chunks, each chunk having a header. The data thus consists of "descriptors" (header) and "payload". In an embodiment, descriptors are time-stamped. Either or both a duration or a second time stamp to mark the end of the data may also be added. The content format should be described. There may be two different content formats, TS (Transport Stream) and ISO BMFF (Base Media File Format).

In an embodiment, for the control layer each packet in the default PIPE has the same "tag-length-value" format as in the common interface. It starts with the protocol objects as defined in EN 50221 7.1.2.

In the foregoing description of the figures, the invention has been described with reference to specific embodiments thereof. It will, however, be evident that various modifications and changes may be made thereto without departing from the scope of the invention as summarized in the attached claims.

It is noted that in the examples reference is mostly made to a CI-Plus system. However, the invention can also be used in connection with a CI system.

In particular, combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. Common Interface, CI, host (10) comprising a Universal Serial Bus, USB, controller (30) for connecting to a USB device (31) of a Common Interface Conditional Access Module, CICAM, (20) the USB controller being configured to use
- a first logical pipe (33) for exchanging control information between the CICAM and the CI host; and
- a second logical pipe (35) for transmitting to the CICAM a first CA encrypted signal.
- a third logical pipe (37) for receiving a first CA decrypted signal, corresponding to the first CA encrypted signal, from the CICAM,
wherein the encrypted and decrypted signals are transported as chunks (60) comprising a header (61), the header including a time indication (63) and a duration indication (65) of the chunk.

2. CI host (10) according to claim 1, wherein the first CA decrypted signal is a first re-encrypted CA decrypted signal and the CI host (10) is configured to decrypt the re-encrypted first CA decrypted signal.

3. CI host (10) according to claim 1 or 2, the USB controller (30) being further configured to use:
- a fourth logical pipe (39) for transmitting to the CICAM a second CA encrypted signal.
- a fifth logical pipe (41) for receiving a second CA decrypted signal, corresponding to the second CA encrypted signal, from the CICAM.

4. CI host (10) according to claim any of the previous claims, wherein the second (33) and further (37, 39, 41) logical pipes use a bulk transfer type.

5. CI host (10) according to any of the previous claims, wherein the control information exchanged over the first logical pipe (33) comprises information about the contents of data chunks (60) transmitted over the second (33) and further (37, 39, 41) logical pipes.

6. CI host (10) according to any of the previous claims, wherein a data chunk (60) comprises a plurality of signal packets (62).

7. CI host (10) according to any of the previous claims, wherein the first logical pipe (33) is a message pipe using the control transfer type.

8. CI host (10) according to any of the previous claims, wherein the first logical pipe (33) is the default control pipe.

9. CI host (10) according to any of the previous claims, comprising a female Type A USB connector for connecting to a male Type A USB connector (27) of a CICAM (20).

10. Digital television device comprising a CI host (10) according to any of the claims 1-9.

11. Common Interface Conditional Access Module, CICAM, (20) for receiving and decrypting a Content Access, CA, encrypted signal, the CICAM (20) comprising a Universal Serial Bus, USB, device (31) for connecting to a USB controller (30) of a Common Interface, CI, host, (10) the USB device being configured to use
- a first logical pipe (33) for exchanging control information between the CICAM and the CI host; and
- a second logical pipe (35) for receiving from the CI host a first CA encrypted signal.
- a third logical pipe (37) for transmitting from the CICAM to the CI host a CA decrypted signal,
wherein the encrypted and decrypted signals are transported as chunks (60) comprising a header (61), the header including a time indication (63) and a duration indication (65) of the chunk.

12. CICAM (20) according to claim 11, wherein the CICAM is configured to re-encrypt the first CA decrypted signal prior to transmitting, and the CI host is configured to decrypt the re-encrypted transmitted signal.

13. CICAM (20) according to any of the previous claims 11-12, comprising a male Type A USB connector (27).

14. CICAM (20) according to any of the previous claims 11-13, comprising a slot (26) for a smart card (25) having a Subscriber Identity Module, SIM, form factor.

15. System (10, 20) of a CI host (10) according to any of the claims 1-9 and a CICAM (20) according to any of the claims 11-14.
